# EUROPEAN PATENT APPLICATION

(11) **EP 4 834 509 A2**
(43) Date of publication of application: **04.11.2026**
(21) Application number: 26174501.2
(22) Date of filing: 24.04.2026
(51) Int. Cl.: B23D 33/02, B23D 15/00, B65B 41/16, B65B 61/06

(54) **DEVICE AND METHOD FOR ACCURATE CUTTING AND EFFICIENT DAMAGE-FREE OUTFEED OF CUT METAL SHEETS FOR TRANSFORMER CORES**

(30) Priority: 28.04.2025 BE 202505275
(71) Applicant: Soenen Technology NV, 8800 Roeselare (BE)
(72) Inventor: HAECK, Pieter, 8800 Roeselare (BE)
(74) Representative: Brantsandpatents bv

(57) **Abstract**

The present invention relates to a device for assisting the outfeed of cut metal sheets for transformer cores, comprising a reel for unwinding a metal sheet coil, an infeed for longitudinally feeding the unwound sheet, a cutting assembly (1) configured to form V-notches and cut the sheet at angles, and an outfeed for discharging the cut sheets, wherein the outfeed comprises a series of sequential guide wheel systems (2, 3) configured to engage straight longitudinal edges of the cut sheet, a drivebelt (8) driven by a servomotor (19) to accelerate the sheet, a length-adjustable frame (13) supporting the drivebelt (8), and magnets integrated within the frame (13) to secure the sheet to the belt (8), wherein the guide wheel systems (2, 3) are controllably moveable transversely to engage and disengage from the sheet edges, often timed relative to the passage of vulnerable vertices. The invention also relates to a method and a use.

## Description

### FIELD OF THE INVENTION

The invention relates to a device and a method to increase the accuracy of cutting and the performance of the outfeed of a production line for cutting sheets for transformer cores and a use of the device and/or method for increasing the throughput of the outfeed.

### STATE OF THE ART

Devices and methods for cutting metal sheets are known from the prior art.

Such a device and method is described, for example, in DE 2506682. The described device and method are specifically directed to the cutting of transformer core sheets. In DE'682 this is done by unwinding a metal coil and feeding the unwound metal, using feed rollers, into the device. The metal sheets are cut at an angles, specifically 45° and -45°, with respect to the longitudinal feed direction of the sheet. Furthermore DE'682 discloses the conveying of metal sheets through use of two fully automatic feed drives.

Sheets for transformers need to be cut with high precision and high production rate. However, overall production throughput depends not only on the cutting section's speed, but also on the efficiency of the outfeed and conveying systems. The cited prior art does not address optimization of overall throughput, particularly in material handling.

A different sheet conveying approach is described in JP66115987, which utilizes electromagnetic belt systems. JP'987 discloses systems including several magnetic belts on the discharge side, driven by a motor and controlled by an electromagnetic module.

US2020042548 discloses another conveying method, where sheets of stiff material are transported using two sets of roller systems. The stiff sheets are clamped between the roller sets for conveying along the transport direction and within the transport plane.

Transformer core sheets require careful handling to avoid damage, especially to corners and edges. Damage can lead to irregular stacking of sheets within the core, resulting in detrimental air gaps and consequent energy losses in the transformer. Furthermore, the production of transformers necessitates adaptability to a range of core sizes, reflecting the diverse requirements of different applications. This implies a need for flexible production lines capable of handling dimensional variations.

The present invention aims to at least find a solution to some of the above-mentioned problems or disadvantages.

### SUMMARY OF THE INVENTION

In a first aspect, the present invention relates to a device for producing transformer sheets, according to claim 1. The device comprises an infeed mechanism, a downstream cutting assembly, and a downstream outfeed equipped with a guide system. This device is particularly advantageous because its guide system is designed to discharge and guide the transformer sheets along a discharge path by engaging their longitudinal edges while specifically avoiding direct contact with vulnerable vertices. This allows for precise guidance and trajectory control of the cut sheets while preventing mechanical damage like deformation or burring, especially at these sensitive geometric features.

Preferred embodiments of the device are set out in claims 2-10. These include features such as: the guide system engaging only longitudinal edges and never directly engaging vertices (claim 2); the guide system comprising guide wheel systems (claim 3); employing a plurality of guide wheel systems configured for independent engagement (claim 4); configuring the guide system to be moveable transversely (claim 5); controlling the engagement pneumatically or electromagnetically (claim 6); incorporating a drivebelt for sheet discharge (claim 7); driving the drivebelt with a servomotor (claim 8); utilizing a length-adjustable frame for the length of the drivebelt support area (claim 9); and integrating magnets in the outfeed to couple the sheet to the drivebelt (claim 10).

A specific preferred embodiment concerns a device according to claims 3-4, where multiple guide wheel systems are configured to independently engage the longitudinal edges of the transformer sheet. This configuration is particularly advantageous as it enables selective, timed engagement and disengagement of individual guide wheel systems. This allows the system to avoid contact with approaching vertices while still providing maximum guidance along the straight portions of the edges, thereby ensuring optimal protection against damage while maintaining precise positioning control during high-speed outfeed.

In a second aspect, the present invention relates to a method for producing a transformer sheet according to claim 11. The method comprises the steps of receiving the transformer sheet from a cutting assembly into an outfeed equipped with a guide system, engaging the longitudinal edges of the sheet with the guide system, moving the sheet along the outfeed using the guide system, and subsequently disengaging the guide system. A key characteristic of this method is that the guide system engages the longitudinal edges *without* engaging the vertices present on those edges.

This method offers the advantage of efficiently discharging accurately cut sheets while preventing damage to delicate vertices. By strategically engaging only the straight longitudinal edge sections and avoiding vulnerable points, the method ensures the production of high-quality transformer sheets suitable for core assembly without compromising production throughput.
Preferred embodiments of the method are described in dependent claims 12-13. These include adapting the length of the length-adjustable frame (supporting the drivebelt) to maintain the distance between drivebelt and cutting assembly (claim 12), and implementing control logic where the guide wheel systems independently engage the sheet only when no vertices are present at their specific location (claim 13).

In a third aspect, the present invention relates to a guide system comprising multiple guide wheel systems according to claim 14, suitable for integration into the device. Each guide wheel system comprises a fixed base for mounting, a moveable base (carrying at least one guide wheel) attached to an actuator and displaceable within the fixed base, an actuator connected to both bases to effect this displacement, and a controller to selectively activate the actuator. The defining characteristic is that the controller can independently engage or disengage each of the multiple guide wheel systems within the overall guide system.

This guide system component is advantageous for applications requiring precise lateral control of products on a conveyor, especially delicate items. The independent, dynamic control allows the guidance to be adapted in real-time based on the specific geometry of the product passing through, maximizing support while minimizing damage risk.

In a fourth aspect, the present invention relates to a drivebelt assembly for discharging metal products at high speeds according to claim 15. This assembly comprises a drivebelt configured to accelerate the metal product, a frame supporting the drivebelt which includes integrated magnets to generate a holding magnetic field, and critically, a servomotor configured to precisely control the velocity and acceleration of the drivebelt.

This drivebelt assembly provides an efficient and highly controlled means for discharging metal products. Key advantages stem from the servomotor's ability to impart precise and rapid acceleration profiles to the belt (and thus the product), combined with the secure handling afforded by the magnetic coupling between the product and the belt surface, facilitating reliable high-speed operation.

### DESCRIPTION OF FIGURES

**Figure 1** shows an isometric perspective view of an embodiment of the disclosed invention in a wide outfeed state.
**Figure 2** shows an isometric perspective view of an embodiment of the disclosed invention in a narrow outfeed state.
**Figure 3** shows an isometric perspective view of an embodiment of the disclosed guide wheel system.
**Figure 4** shows an isometric perspective view of an embodiment of the disclosed mechanism for a length-adjustable frame in shortened state.
**Figure 5** shows an isometric perspective view from the bottom of an embodiment of the disclosed mechanism for a length-adjustable frame in elongated state.
**Figure 6** shows 5 positions (P1 to P5) of the metal sheet in the outfeed configuration of the disclosed invention, with indication of the engagement of each separate guide wheel system in a series.
**Figure 7** shows a general outline of a transformer sheet, indicating the direction of movement in the outfeed, the longitudinal sides and vertices prone to damage by the guide system.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the context of this document the main longitudinal side of a metal sheet, indicates the longitudinal side of the metal sheet that does not have a V-notch discontinuity. The longitudinal side containing the V-notch discontinuity is referred to as the secondary longitudinal side. Due to the V-notch discontinuity the secondary longitudinal side often contains a larger amount of cuts and vertices, prone to damage.

In the context of this document a vertex is defined as an intersection of a longitudinal edge of the metal sheet and a non-parallel edge, which specifically is prone to damage. These vertices are prone to damage during the handling of the cut metal sheets.

In the context of this document a series refers to a plurality of the same component, containing at least two of said components.

In the context of this document the term metal sheet refers to a sheet of metal before the final cut occurred in the cutting assembly.

In the context of this document the term transformer sheet refers to a fully cut metal sheet ready for application within the production of transformer cores.

In the production of transformer core sheets, elongated metal sheets, typically supplied from a coil, are fed through processing machinery. This often involves cutting operations to create specific shapes, including cuts to define the sheet length and potentially complex cuts along the longitudinal edges, such as V-notches, which are common in stepped-lap core designs. These cutting operations result in sheets having defined longitudinal edges, transverse edges, and various vertices. Vertices occur notably at corner points where longitudinal and non-parallel edges meet, and importantly, also at intersection points where features like V-notches meet the main longitudinal edge.

After cutting, the finished transformer sheets must be rapidly and reliably discharged and guided through an outfeed section, often onto a stacking unit or further processing stage. A significant problem arises during this outfeed or discharge phase. Conventional guiding systems that engage the longitudinal edges of the sheets to maintain alignment can inadvertently apply pressure or force directly onto the sensitive vertices, especially those associated with V-notches or sharp corners. This direct contact can easily cause damage, such as deformation or bending of these vertices. Such damage is highly undesirable as it can negatively impact the stacking factor of the final transformer core, increase electrical losses, and complicate the assembly process. This problem is exacerbated by the trend towards higher production speeds.

The present invention aims to overcome these drawbacks by providing a device, method, and components wherein the transformer sheets are effectively guided during outfeed while actively preventing damage to their vulnerable vertices.

In a first aspect, the invention relates to a device for assisting the outfeed of transformer sheets for transformer cores.

The device comprises an infeed mechanism for feeding metal sheets in a longitudinal feeding direction. Preferable the device comprises a reel for unwinding a coil of metal sheet. Even more preferably the device comprises suitable means for unwinding the coil of metal sheet.

The device comprises an infeed for longitudinally feeding the metal sheet to a cutting assembly. In an embodiment the infeed comprises two feed rollers. At least one of the feed rollers is moveable in height, transverse to the longitudinal direction, for clamping the unwound metal sheet between the two feed rollers.
At least one of the feed rollers is coupled to a drive motor. The drive motor is preferably an electric motor. Preferably, both the feed rollers are coupled to a drive motor. More preferably both feed rollers are coupled to the same drive motor. By clamping the metal sheet between the two feed rollers and driving at least one of the feed rollers, the unwound metal can be moved through the device in the longitudinal direction. The two feed rollers are preferably coated with a rubber layer, a polyurethane layer or another suitable protective layer. This is advantageous to prevent damage to the unwound metal. Alternatively, the infeed comprises wheels or conveyor belts, between which the metal is clamped or with which the metal is magnetically coupled for transportation towards the infeed.

The device comprises a cutting assembly, configured to form V-notches, cutting the metal sheet at angles of 45°C±5° and -45°±5° and punching holes in the unwound metal sheet. More specifically the cutting assembly comprises one or more cutting tools, such as shearing blades or laser cutting elements Preferably the punching of holes is performed by dedicated punching tools integrated within the cutting assembly, which may operate in conjunction with or independently of the cutting operation. Furthermore the cutting assembly is designed to process metal sheets of various materials and thicknesses.

The device comprises an outfeed for discharging the cut metal sheets. The outfeed comprises a series of guide systems that engage with the longitudinal edges of the transformer sheet. Through engaging the longitudinal edges and avoiding direct contact with the vertices, the lateral position of the sheet can be guided and damage can be prevented. The deliberate avoidance of direct contact with vertices of the guiding elements addresses a problem where conventional guide systems indiscriminately engage the sheet edges. The application of forces or pressure to vertices often lead to deformation, bending or other forms of mechanical damage.

In a preferred embodiment the guide system only engages the longitudinal edges and never engages the vertices of the transformer sheet. By circumventing the vertices and only interacting with the longitudinal edges the device ensures that the sheet is reliably guided during discharge, while simultaneously preventing damage to critical features of the sheet. The preservation of vertex integrity results in higher quality transformer sheets, reduced scrap rates and improved performance of the final transformer core.

The use of a guide system that only engages the longitudinal sides allows for preventing damage in the outfeed, while simultaneously offering an exact positioning of the sheet. The accurate lateral positioning during the activation of the cutting assembly results in a more accurate cutting of the transformer sheet. Inaccuracy are avoided by to the precise lateral positioning of the sheet.

In an embodiment the guide system comprises at least one guide wheel system. The aforementioned guide wheel system is configured to guide the transformer sheet along the designated discharge path within the outfeed. The guide wheel system comprises of one or more wheels mounted such that they can rotate, often freely, about an axis. The wheels are strategically positioned adjacent to the discharge path of the transformer sheet, so that the circumferential surface can make contact with a longitudinal edge of the sheet.

The implementation of a guide wheel system offers several practical advantages, particularly in the context of handling potentially delicate, precisely cut metal sheets. Wheels can be mounted on bearings, as to provide a rolling contact with the sheets. A rolling contact, in comparison to a sliding or static guide elements, reduces significantly the friction occurring at the contact surface. The lower friction minimizes the risk if scratching or marking the sheet edge and reduces the forces required for transport, contributing to a smoother operation.

The guide wheel system is further designed and operated to achieve the vertex avoiding guidance. The configuration and control ensure that the guide wheel system engages the substantially straight portions of the transformer sheet's longitudinal edges. The implementation of the guide system as a guide wheel system, therefore, represents a preferred technical embodiment for a damage-free guidance of the transformer sheet.

According to a preferred embodiment the guide wheel systems comprise of at least one guide wheel, comprising a protective outer layer to minimize damage to the cut metal plates. This protective outer layer is selected from a range of materials, including, but not limited to, rubber, polyurethane, Polytetrafluoroethylene (PTFE), silicone, specialized elastomers or wear resistant materials, such as carbide, each offering distinct advantages based on the application and material of the metal sheet.

By providing a protective outer layer, the cut metal sheets are significantly protected during potential collisions with the wheels or when subjected to sliding friction against the wheels. This protection is crucial for maintaining the surface integrity and dimensional accuracy of the sheets.

Another embodiment may drive the wheels synchronized to the speeds of the outfeed. In this manner the guide wheels might have a small contribution to the acceleration and propulsion of the cut metal sheets in the outfeed.

In a preferred embodiment a plurality of guide wheel systems are used in a series. The term 'series' indicates the use of at least two systems. A series of guide wheel systems is provided at one of the longitudinal sides of the transformer sheet.

A particularly preferred embodiment of the device employs a plurality of guide wheel systems at both longitudinal sides of the transformer sheet. The multiple guide wheel systems are typically arranged in a series. The systems are typically spatially distributed along the direction of the discharge path and adjacent to the longitudinal edge of the transformer sheet. The arrangement in series allows for a more continuous and distributed application of guiding forces along the length of the sheet, compared to a single point of contact.

A crucial functional characteristic of this embodiment is that the individual guide wheel systems within the series are configured so that they can engage separately and independently from each other. This means that the engagement of one guide wheel system can be controlled by the system's controller, without dictating or being dependent on the engagement state of any other guide wheel system in that series.

The independent engagement is fundamental to achieving the primary objective of guiding the transformer sheet effectively, while reliably avoiding contact with its vertices. By controlling each system individually, the overall guide system can dynamically adapt its points of contact based on the specific geometry of the longitudinal edge moving past at any given moment. For instance, as a vertex approaches a particular guide wheel system, that specific system can be instructed to disengage or retract just before the vertex arrives and potentially re-engage just after it has passed. Therefore, employing a plurality of guide wheel systems configured for separate and independent engagement provides a highly effective and adaptable solution for guiding transformer sheets with complex edge features, maximizing guidance along clear edges while meticulously preventing damaging interactions with vertices.

Independent engagement of the guide wheel systems further increase the precise lateral positioning of the sheet, prior to activation of the cutting assembly. The more precise positioning leads to a more precise cutting of the sheets, therefore leading to less inaccuracies. Furthermore, after a more accurate cutting of the plate, the plate can be discharged in a more safe manner.

In accordance to another advantageous embodiment of the disclosed invention, the guide system of the outfeed is configured to be moveable. This enlarges the operational flexibility and adaptability of the device. The general movement of the guide system occurs within the general plane occupied by the sheet itself, but transverse to the longitudinal direction of the sheets. This allows for the guide systems to maintain the correct vertical alignment, relative to the sheet.

The primary advantage of incorporating a transverse moveability is to enable the outfeed to be easily and effectively adapted for processing a wider variety of transformer sheets or other similar flat products. By allowing the mainly transverse movement, the width of the outfeed discharge channel can be precisely tailored to match the specific width of the transformer sheet. This ensures accurate lateral guidance for both narrow and wide sheets, increasing the versatility and adaptability of the device.

In another embodiment the guide wheel systems are mounted on linear slides or rails and the movement may be controlled by a linear actuation system, such as a ball screw or lead screw, or an automated system such as servomotors or stepper motors. An automated control could allow, through use of linear encoders, for a feedback loop, facilitating a quick changeover for different sheet sizes, minimizing in that way the downtime.

In a particularly preferred embodiment of the disclosed invention the final engagement of the guide wheel systems is accomplished through a small, controlled translation of a guide wheel with an actuator. Typically a guide wheel system comprises at least one guide wheel that is mounted on a moveable base. The moveable base is attached to the aforementioned actuator and undergoes a small translational movement during engagement.

The engagement is generally directed transversely to the longitudinal edge of the transformer sheet. The magnitude of the translation is typically minimal, just sufficient to ensure firm guiding contact when engaged and adequate clearance to avoid vertices when disengaged. The engagement distance usually falls within the range of 0.5 to 25 mm.

Preferably the engaging movement is an actively driven movement by an actuator associated with the guide wheel system. The actuator selected for this is preferably pneumatic or electromagnetically driven. The preference for said actuators stems from their operational advantages, such as the rapid actuation. Both states of the actuators (extended or retracted) can be reached near-instantaneously upon receiving a control signal. The high speed is of critical importance for the invention as a rapid extension or retraction after or before a vertex leads to a more accurate control of the sheet's lateral position and a reliable vertex avoidance.

Furthermore, these actuators integrate seamlessly with electronic control systems, to base their operation on pre-programmed or sensor input signals. They also offer reliable operation and sufficient force generation for consistent (dis)engagement in an industrial environment. In an embodiment the guide wheel system may be integrated with sensors to monitor the sheet position and speed, enabling a feedback control for automated adjustments and error correction.

A preferred embodiment of the current disclosed invention therefore contains two movements in the transverse direction. The first being a general transverse movement to bring the guide wheel system in the vicinity of the transformer sheet and the second a final engagement. Both movements are in the transverse direction to the longitudinal edges of the transformer sheet, but differ in magnitude of the translation. The engagement of the wheels is the smaller movement of the two transverse translations.

This setup allows for a precise lateral positioning of the guide wheel systems to guide the transformer sheet, while still allowing a rapid (dis)engagement to prevent the sheet from any unwanted damage. This also allows for a quick and dynamic finetun-ing of the guide system, increasing the performance of the general production.

In an embodiment the outfeed comprises a drivebelt to accelerate the cut metal sheet for efficient discharging, wherein the drivebelt is driven by a electromotor, preferably a servomotor. The servomotor provides precise speed and torque control, enabling dynamic adjustments of belt speed to match the specific requirements of the cutting process. The belt's speed is synchronized with the supply speed of the sheet prior to cutting, ensuring seamless material flow and minimizing disruptions.

During activation of the cutting assembly, belt speed should be 0 m·s-1 to remove the influence of the belt on the sheet and avoid the formation of metal burrs or damage to the cut edge. A precise control of the belt speed is crucial for ensuring the quality of the cut and preventing imperfections that could affect the performance of the transformer cores.

The coupling of the belt to the servomotor allows for accelerations of the cut sheet between 10 to 42 m·s⁻², enabling the sheet to quickly reach discharge speeds between 4 and 5 m·s⁻¹. This rapid acceleration and high speed allows for increase in throughput and productivity of the device for cutting sheets for transformer cores.

In a preferred embodiment, the device comprises a length-adjustable frame specifically designed to accommodate for variability in width of the metal sheet sizes. This adjustability is characterized by the ability to modify the length of the supporting area of the drivebelt, ensuring the position of the drivebelt relative to the knife.

To ensure consistent and reliable operation across all sheet sizes, the supporting area of the drivebelt can be adjusted in direct correlation with the sheet length. Maintaining a constant distance between the belt's end and the cutting knife is critical for precise sheet acceleration and discharge.

An embodiment comprises a control getting feedback from integrated position sensors. The obtained position information can then be used within software to send control signals to an automated length adjustment system, allowing for rapid and precise adjustments based on the sheet size parameters.

In a preferred embodiment the length-adjustable frame is characterized by magnets integrated within both the fixed and/or moveable part of the frame. This integration aims to create a consistent and controllable magnetic field along the sheet's path, ensuring secure retention against the drivebelt, regardless of the frame's adjusted length. The strategic placement of magnets along the fixed and/or length-adjustable part of the frame ensures that the magnetic field is consistently applied along the length of the sheet, regardless of the frame's adjusted position, preventing slippage and maintaining precise sheet control.

Preferably, recesses are provided in the outfeed to mount electromagnets or permanent magnets, to generate a uniform magnetic field. In a preferred embodiment the magnetic field is generated by electromagnets, driven by a magnetic field control. Through use of a control, the strength of the magnetic field can be adjusted, based on the material and thickness of the transformer sheets. This would allow for a more durable use of electric energy, depending on the transformer sheets being produced.

In a second aspect the present invention pertains to a method for efficiently and accurately producing transformer sheets, intended for the construction of transformer cores. The transformer sheets comprise two oppositely positioned longitudinal edges, wherein a V-notch and vertices are present in at least one of the longitudinal edges. The method comprising the steps of:
- receiving the transformer sheet from a cutting assembly in an outfeed comprising a guide system;
- engaging the longitudinal edges of the transformer sheet with the guide system;
- moving the transformer sheet with the guide system along the outfeed
- disengaging the guide system, after moving the transformer sheet.

The guide system are positioned to provide lateral stability to the transformer sheet. The guide system preferably engage the longitudinal edges, without engaging any of the vertices of the longitudinal edge.

Even more preferably the guide systems are controlled in a dynamic manner to avoid any and all crucial vertices, while providing the most possible lateral guidance to the metal sheet.

The guide systems, preferable guide wheel systems, their engagement should be designed in a manner to minimize the frictional forces and prevent scratching or damage to the cut metal sheets.

Once the sheet has been discharged, the guide systems are disengaged. Preferably the guide systems are disengaged after crucial vertices have passed the guide wheel system.

In a preferred embodiment of the invention the length of the supporting area of the drivebelt is adjusted according to the size of the metal sheets, to ensure that the drivebelt maintains the same distance from the cutting assembly. Preferably this is performed after discharging the cut metal sheet from the system and prior to receiving the upcoming cut metal sheet for discharge.

In another embodiment the adjustment of the supporting area of the belt is performed simultaneously to the disengaging of the guide wheel systems and prior to receiving the next cut metal sheet for discharge.

In a preferred embodiment the servomotor, and therefore the drivebelt, is stationary during the activation of the cutting assembly to assure clean cuts and avoid formation of burrs. This may be achieved by a start-stop sequence of the servomotor or by a disconnectable coupling of the motor to the drivebelt.

The activation and acceleration of the servomotor drives the acceleration of the belt and the metal sheet. Precise acceleration and torque control of the servomotor allow for rapid acceleration of all connected components and lead to fast discharge of the cut metal sheet. The acceleration of the drivebelt translates to a corresponding acceleration of the cut metal sheet.

In another preferred embodiment the method comprises feedback from a sensor system for precise vertex detection and location. This feedback could play a vital role in the location of vertices and designing a dynamic control of the guide wheel systems.

Sensors such as, but not limited to, optical sensors or proximity sensors could provide real-time information about the location of the next vertices, if positioned strategically. The output values of the sensor could be used within a control system, controlling the engagement of guide wheel systems. In this way leading to enhanced damage prevention of the cut metal sheets, improved throughput and enhanced flexibility and adaptability.

In a different preferred embodiment the location of vertices is extrapolated from simulation and programming based data, reducing the need for physical sensors.

In a third aspect, the invention relates to a guide system designed for precise control of the lateral position of products on a conveyor. This system comprises a plurality of guide wheel systems and is particularly advantageous in applications where delicate or precise positioning of products is required.

The device comprises a fixed frame, which serves as a stable mounting structure. The frame is designed to be securely attached within a larger assembly, such as an outfeed mechanism or a conveyor line. Furthermore it provides rigid support for other components of the guide wheel system.

The device comprises a moveable wheel holder, on which at least one guide wheel is mounted. The wheel holder is moveably mounted within the fixed frame and is used to engage or disengage the guide wheels with the product. The position of the moveable wheel holder is controlled by an actuator.

The device further comprises an actuator connected to the moveable wheel holder. The actuator is employed to displace the moveable wheel holder in a linear translative motion, enabling precise engagement of the guide wheels. The type of actuator is selected to provide sufficient force and speed for the desired products.

In a preferred embodiment the actuators of each of the guide wheel system can be engaged independently from the engagement state of the other guide wheel systems in a dynamic manner.

In a preferred embodiment the guide wheels are mounted on the moveable wheel holder through use of bearings for smooth rotation. Preferably, due to small axial forces on the guide wheel systems, the bearings implemented in the design are needle, cylinder or ball bearings.

In a particularly preferred embodiment guide wheels can be driven by drive mechanism to assist propelling the products in the direction of the outfeed.

In a fourth aspect, the present invention related to a drivebelt assembly specifically designed for the efficient and controlled discharge of metal products. This assembly is engineered to provide precise acceleration and secure handling of metal products.

The drivebelt assembly comprises a drivebelt for accelerating and discharging the metal products and a servomotor connected to the drivebelt. The servomotor provides precise control over its velocity and acceleration and by extension the velocity and acceleration of the belt. The servomotor is controlled by a control, enabling a precise acceleration and torque control.

### DESCRIPTION OF FIGURES

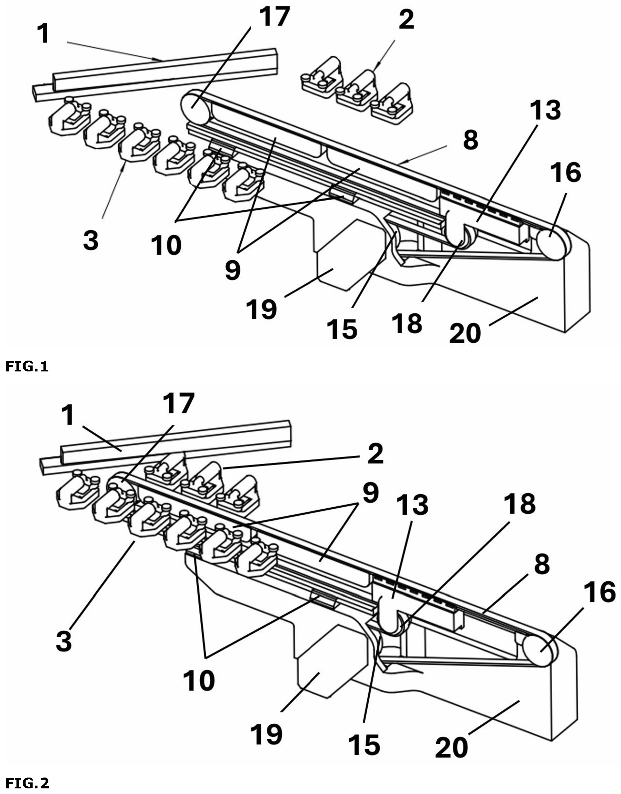

**Fig.** 1 illustrates an isometric perspective view of an embodiment of the apparatus configured in a wide outfeed state and with its length-adjustable frame (13) in a shortened state. The apparatus comprises a main longitudinal side supporting a first series of guide wheel systems (3), depicted here as six such systems, and a secondary longitudinal side supporting a second series of guide wheel systems (2), depicted here as three such systems. These series of guide wheel systems (2, 3) are configured to guide a transformer sheet processed by the apparatus.

The view shows the position of a knife (1), relative to the outfeed path of the transformer sheet when the apparatus is set for a wide outfeed. To maintain cutting quality by limiting burr formation on the cut edge of the transformer sheet, a moving pulley (17) is adjustably positionable relative to the knife (1) to maintain the distance between drivebelt and knife. This adjustment typically involves moving the knife (1) in a direction transverse to the longitudinal path of a drivebelt (8).

The drivebelt (8), configured as an endless loop, follows a defined path. The drivebelt (8) extends from the moving pulley (17), located at a first end, towards a fixed pulley (16), located at a second, opposite end. This upper run is supported by a plurality of supports (9). From the fixed pulley (16), the drivebelt (8) wraps around it and proceeds to a drive pulley (15). The drive pulley (15) is operatively connected to, and driven by, a servomotor (19). From the drive pulley (15), the drivebelt (8) wraps around a moving reversing pulley (18), before looping back towards the moving pulley (17). Along this return path on the lower run, the drivebelt (8) is guided by linear guides (10).

Furthermore, **Fig.** 1 shows the length-adjustable frame (13), which influences the overall length of the belt's supporting area and the position of the belt relative to the knife (1), in a shortened configuration. In this state, the spatial separation between the drive pulley (15) and the moving reversing pulley (18) is maximized. Consequently, the loop segment of the drivebelt (8) extending between the drive pulley (15) and the moving reversing pulley (18) is at its maximal length. This configuration inversely minimizes the length of the upper, supporting area of the drivebelt (8) between pulleys (17) and (16). The combination of the wide outfeed state and the shortened state of the frame (13) configures the apparatus for producing transformer sheets that are relatively wide. The state of the length-adjustable frame maintains the distance between knife and the drivebelt.

**Fig. 2** illustrates an isometric perspective view of the same embodiment shown in **Fig. 1****,** but configured in a narrow outfeed state and with the length-adjustable frame (13) in an elongated state. The apparatus comprises a first series of guide wheel systems (3), depicted as six such systems, on the main longitudinal side and a second series of guide wheel systems (2), depicted as three such systems, on the secondary longitudinal side.

To achieve the narrow outfeed state, the first series of guide wheel systems (3) on the main longitudinal side are moved transversely inwards, relative to the longitudinal direction of the drivebelt (8). The second series of guide wheel systems (2) on the secondary longitudinal side are capable of moving both transversely inwards and longitudinally, allowing them to compensate for a potentially angled position of the knife (1) required for certain narrow or angled cuts. Concurrently with the inward transverse movement of the guide wheel systems (3), the knife (1) is also moved transversely (e.g., upwards) relative to the drivebelt (8) path to accommodate the narrow outfeed configuration. Furthermore the length-adjustable frame is in the elongated state, to maintain constant distance between knife and drivebelt for more accurate and precise cuts.

The drivebelt (8), configured as an endless loop, follows a defined path. The drivebelt (8) extends from the moving pulley (17), located at a first end, towards a fixed pulley (16), located at a second, opposite end. This upper run is supported by a plurality of supports (9). From the fixed pulley (16), the drivebelt (8) wraps around it and proceeds to a drive pulley (15). The drive pulley (15) is operatively connected to, and driven by, a servomotor (19). From the drive pulley (15), the drivebelt (8) wraps around a moving reversing pulley (18), before looping back towards the moving pulley (17). Along this return path on the lower run, the drivebelt (8) is guided by linear guides (10).

**Fig. 2****,** furthermore, shows the length-adjustable frame (13) in an elongated state, in order to keep the drivebelt at the same distance from the knife. This elongation causes the moving reversing pulley (18) to be positioned spatially close to the drive pulley (15), moving along a guided path defined by the frame's extension mechanism. Consequently, the loop segment of the drivebelt (8) between the drive pulley (15) and the moving reversing pulley (18) is shortened. This shortening of the lower loop inversely results in an elongation of the length of the upper, supporting area of the drivebelt (8) between moving pulley (17) and the fixed pulley (16). The combination of the narrow outfeed state and the elongated state of the frame (13) configures the apparatus for producing transformer sheets that are relatively narrow and long.

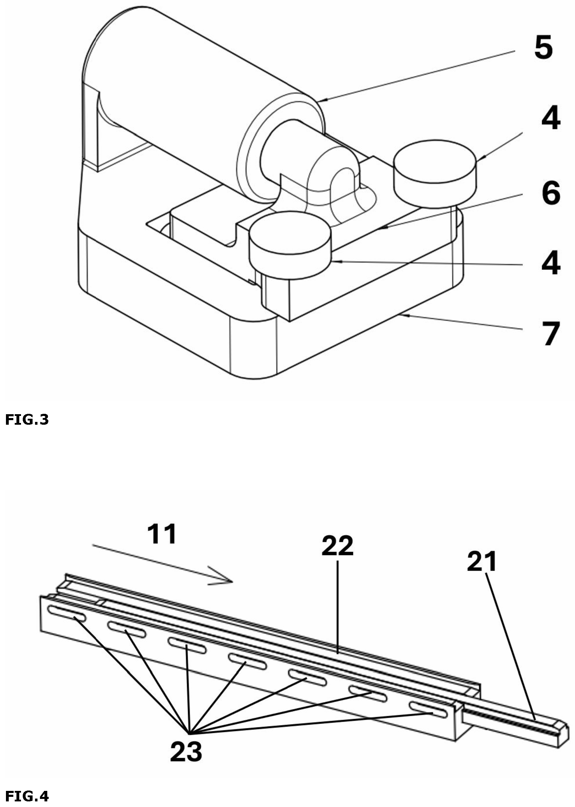

**Fig. 3** shows a detailed view of a preferred embodiment of a single guide wheel system in an engaged state. The system comprises an actuator (5), a fixed base (7) intended for mounting to the apparatus frame, and a moveable base (6). The actuator (5) is operatively connected between the fixed base (7) and the moveable base (6). One or more guide wheels (4) are rotatably mounted on the moveable base (6). Engagement of the actuator (5) causes the moveable base (6) to translate relative to the fixed base (7). This translation, in turn, moves the attached guide wheels (4) into or out of an operative engagement position with the edge of a transformer sheet being processed. The depicted engaged state shows the moveable base (6) and guide wheels (4) pushed forward by the actuator (5).

The actuator (5) can be, for example, pneumatically or electromagnetically driven, allowing for rapid transitions between engaged and disengaged states. This capability for near-instantaneous (dis)engagement allows the guiding function to be dynamically adapted based on the specific geometric configuration (e.g., presence of vertices, chamfers, or varying widths) of the transformer sheet currently being produced. Such adaptive control is advantageous for providing optimal guidance along straight edges while ensuring that vulnerable features like vertices on the longitudinal sides of the transformer sheets are not directly contacted or damaged by the guide wheels (4).

**Fig. 4** shows an isometric view detailing a preferred embodiment of the mechanism enabling the length-adjustable frame (13). The mechanism comprises a fixed part (21) and a moveable part (22). The fixed part (21) is configured to act as a linear guide rail and is mounted to the main structure of the apparatus. The moveable part (22) is configured as a linear guide carriage, slidably engaged with the fixed part (21), allowing relative horizontal movement between the two parts as indicated by the arrow (11). The moving reversing pulley (18) (not shown in this detail) is typically mounted directly or indirectly to this moveable part (22). In this manner the extension or retraction of the moveable part (22) relative to the fixed part (21) adjusts the position of pulley (18). Thereby adjusting the length of the drivebelt's (8) supporting area., to keep the drivebelt at the same distance from the knife when changing the outfeed width.

Furthermore, recesses (23) are provided on the sides of the moveable part (22). These recesses (23) are configured and dimensioned to receive magnets, which may be electromagnets or permanent magnets. These magnets, when housed within the recesses (23), are intended to contribute to generating a uniform magnetic field. This magnetic field can be employed to temporarily couple the transformer sheet to the upper surface of the drivebelt (8), assisting in precise transport and positioning of the sheet during processing.

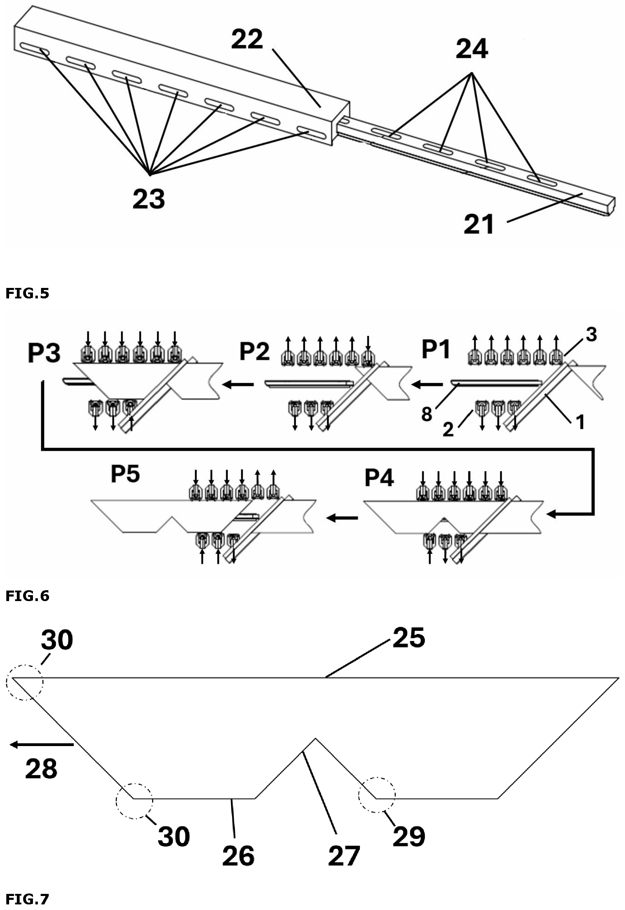

**Fig.5** shows an isometric view detailing the bottom of a preferred embodiment of the mechanism enabling the length-adjustable frame (13), in elongated state. The mechanism comprises a fixed part (21) and a moveable part (22). The fixed part is configured to act as a linear guide rail and is mounted to the main structure of the apparatus. The moveable part is configured as a linear guide carriage, slidably engaged with the fixed part. This allows relative horizontal movement between the two parts. The moving reversing pulley (not shown in this detail) is typically mounted directly or indirectly to the moveable part of the frame, such that an extension or retraction of the moveable part will adjust the position of the pulley and thereby change the length of the supporting area of the drivebelt.

Furthermore recesses (23 & 24) are provided in both parts. Recesses (23) are provided on the sides of the moveable part of the frame, while the recesses (24) are provided on the bottom of the fixed part of the frame. These recesses are configured to mount electromagnets or permanent magnets. These magnets, when housed in the frames, are intended to provide a uniform magnetic field across the length of the frame. This magnetic field is employed to temporarily couple the transformer sheet to the upper supporting area of the drivebelt, assisting in precise transport and positioning of the sheet during processing.

By providing the recesses in both parts of the frame, i.e. moveable and fixed, it is intended to provide a uniform magnetic field in whatever state or position the length-adjustable frame is in.

**Figure 6** provides a schematic top-view representation illustrating five distinct operational steps, labeled **P1** through **P5,** of a preferred embodiment of the control methodology for the apparatus according to the present invention. Each step depicts key components including a first series of guide wheel systems (3) located on a main longitudinal side (shown here comprising six individual systems), a second series of guide wheel systems (2) located on a secondary longitudinal side (shown here comprising three individual systems), the final knife (1) of the cutting assembly, and the drivebelt (8) which transports a transformer sheet. Within each step (P1-P5), arrows are used schematically to indicate which individual guide wheel systems within the series (2, 3) are in an engaged state versus a disengaged state. This sequence demonstrates the selective actuation of the guide wheel systems to provide accurate guidance while preventing damage to vulnerable geometric features of the transformer sheet, such as vertices.
- **Step P1:** This step illustrates the initial state prior to or at the very beginning of the transformer sheet entering the outfeed section of the apparatus, transported by the drivebelt (8). To allow unobstructed entry of the leading edge of the transformer sheet, all guide wheel systems in both the first series (3) and the second series (2) are controlled to be in a disengaged state. The apparatus is ready to receive the incoming transformer sheet.
- **Step P2:** This step depicts the initial entry phase of the transformer sheet into the outfeed zone defined by the guide wheel systems (2, 3). As the sheet progresses, its leading edge, including a first vertex located on its main longitudinal side, moves past the position of the first individual guide wheel system of the series (3). Immediately following the passage of this first vertex, the corresponding first guide wheel system of the series at the main longitudinal side (3) is selectively actuated into an engaged state, as indicated by the arrow. This rapid engagement provides immediate lateral guidance to the edge of the transformer sheet directly trailing the vertex, thereby maximizing the duration of accurate guidance without risking mechanical impingement or damage to the leading vertex itself. At this stage, all other guide wheel systems in series (3) and all systems in the series at the secondary longitudinal side remain disengaged, as the relevant features of the transformer sheet have not yet reached their respective positions.
- **Step P3:** This step shows the transformer sheet further advanced along the outfeed path. As the leading edge of the sheet progressively moves past the subsequent guide wheel systems on the main longitudinal side, each corresponding guide wheel system in series (3) is sequentially actuated into the engaged state shortly after the leading main longitudinal side vertex clears its position. Simultaneously, on the secondary longitudinal side, the corresponding leading vertex has passed the first guide wheel system, causing it to engage. However, due to the geometry of the transformer sheet, the leading feature has not yet fully passed the second guide wheel system of series on the secondary longitudinal side; therefore, the second and third systems remain disengaged. This demonstrates the independent control and adaptation to the specific geometry of the workpiece edge on both sides.
- **Step P4:** The transformer sheet (TS) continues its forward movement in this step. All guide wheel systems in the series on the main longitudinal side remain engaged, providing continuous lateral guidance along the main longitudinal edge. On the secondary longitudinal side, the transformer sheet (TS) features a geometric characteristic, such as a V-notch, which presents intermediate vertices along the edge. To prevent collision and potential damage to these vertices, each separate guide wheel system in the series on the secondary longitudinal side is selectively controlled to disengage just before such a vertex reaches it, and may re-engage after the vertex has passed, depending on the specific control logic and sheet geometry. The figure schematically shows the guide wheel systems disengaged in this phase to protect such features.
- **Step P5:** This final illustrated step depicts the phase after the transformer sheet has been cut by the knife (1) and is being discharged from the apparatus. The engagement state of the guide wheel systems during discharge can be adapted. If the trailing longitudinal edges of the now-cut sheet are straight and do not present vertices prone to damage, the relevant guide wheel systems may remain engaged to assist in smoothly guiding the sheet completely out of the apparatus. However, as the trailing end of the sheet passes each guide wheel system, that individual system disengages. This disengagement serves two purposes: firstly, to avoid interference with any potentially vulnerable trailing vertices, and secondly, to reset the guide system to the open state, ready to receive the next incoming transformer sheet without obstruction.

By implementing this methodology of selective and timed actuation of individual guide wheel systems based on the precise longitudinal position of specific geometric features (vertices, notches, leading/trailing edges) of the transformer sheet, the apparatus effectively guides the sheets through the outfeed path. This prevents damage to critical vertices while maximizing the duration of lateral support, thereby contributing to increased production line performance, reduced waste, and the reliable production of accurately dimensioned transformer sheets suitable for assembly into transformer cores. This selective actuation is enabled by the individually controllable actuators associated with each guide wheel system.

**Figure 7** presents a schematic top view illustrating the general outline of an exemplary transformer sheet according to an embodiment of the invention. The sheet is depicted with key geometrical features and indicates potential areas of concern during processing, specifically during discharge from an outfeed mechanism.

The transformer sheet possesses a first or main longitudinal edge, designated by reference numeral (25), and an opposing second or secondary longitudinal edge, designated by reference numeral (26). Integrated into the secondary longitudinal edge (26) is a V-notch (27).

An arrow (28) is included to indicate the intended direction of discharge or movement of the transformer sheet as it exits the processing or outfeed station. This discharge movement highlights specific areas of the sheet's geometry that are particularly susceptible to mechanical damage, notably several vertices.

Identified vertices prone to damage include those designated by reference numerals (29) and (30). Specifically, two such vulnerable vertices (30) are situated at the leading side of the transformer sheet, considered relative to the discharge direction (28). These leading vertices (30) are particularly at risk of damage resulting from interaction or contact with guide systems commonly employed in such outfeed mechanisms. Furthermore, another vertex identified as prone to damage (29) is located at or in the immediate vicinity of the V-notch (27).

To ensure the integrity of the transformer sheet and prevent defects such as deformation at these critical vertices (29, 30) during the discharge operation, it is imperative that these vertices (29, 30) are prevented from forcefully engaging or colliding with elements of the guiding system.

The illustration in Figure 7 serves to underscore the advantage provided by the present disclosed invention. The invention's feature of enabling independent and dynamic control over the guide systems allows for precise, real-time adjustment of the guide positions relative to the transformer sheet being discharged. This dynamic control capability ensures that the guide elements can be actively maneuvered to avoid contact with the vulnerable vertices (29, 30), thereby substantially minimizing or eliminating the occurrence of damage at these locations during the outfeed process.

It is clear that the method according to the invention, and its applications, are not limited to the presented examples.

The present invention is in no way limited to the embodiments described in the examples and/or shown in the figures. On the contrary, methods according to the present invention may be realized in many different ways without departing from the scope of the invention.

## Claims

1. A device for cutting elongated metal sheets into transformer core sheets, comprising:
• an infeed mechanism that feeds metal sheets in a longitudinal direction,
• a downstream cutting assembly that creates transformer sheets by cutting V-notches along one longitudinal edge, wherein vertices occur at intersection points where the V-notch meets the longitudinal edge and at corner points where the longitudinal edges meet the transverse edges at the ends of the transformer sheet,
• a downstream outfeed with a guide system that discharges and guides the transformer sheets along a discharge path by engaging their longitudinal edges,
**characterized in, that** the guide system is designed to guide along the longitudinal edges avoiding direct contact with said vertices.

2. The device according to claim 1, **characterized in, that** the guide system only engages longitudinal edges and never directly engages vertices of the transformer sheet.

3. The device according to any of the preceding claims 1-2, **characterized in, that** the guide system comprises a guide wheel system, configured to guide the transformer sheet along the discharge path.

4. The device according to the preceding claim 3, **characterized in, that** the guide system comprises a plurality of guide wheel systems configured to independently engage the longitudinal edges of the transformer sheet.

5. The device according to any of the preceding claims 1-4, **characterized in, that** the guide system is configured to be moveable in a transverse direction within the plane of the transformer sheet.

6. The device according to any of the preceding claims 1-4, **characterized in, that** the engagement of the guide system is controlled in a pneumatic or electromagnetic manner.

7. The device according to any of the preceding claims 1-5, **further comprising** a drivebelt for discharging the transformer sheet.

8. The device according to the preceding claims 6, **characterized in, that** the drivebelt for discharging the transformer sheet is driven by a servomotor.

9. The device according to any of the preceding claims 1-7, **further comprising** a length-adjustable frame supporting the drivebelt, **characterized in that** the length of length-adjustable frame can be adjusted to adjust the length of the supporting area of the drivebelt.

10. The device according to any of the preceding claims 1-8, **further comprising** magnets in the outfeed to couple the transformer sheet to the drivebelt for discharging.

11. A method for producing a transformer sheet, wherein a transformer sheet is a processed metal sheet comprising two oppositely positioned longitudinal edges, wherein a V-notch and vertices are present in a longitudinal edges, comprising the steps of:
• receiving the transformer sheet from a cutting assembly in an outfeed comprising a guide system and a drivebelt;
• engaging the longitudinal edges of the transformer sheet with the guide system;
• moving the transformer sheet with the guide system along the outfeed
• disengaging the guide system, after moving the transformer sheet;
**characterized in that** the guide system engages the longitudinal edges without engaging vertices of the longitudinal edge of the transformer sheet.

12. A method according to claim 11, **characterized in, that** the length of the length-adjustable frame is adapted to maintain a constant distance between the cutting assembly and the drivebelt.

13. A method according to any of the preceding claims 11-12, the guide system comprising a plurality of guide wheel systems, **characterized in, that** the guide wheel systems independently engage with the transformer sheet if no vertices are present in its location.

14. A guide system comprising multiple guide wheel systems, suitable to be integrated in the device of claims 1-10 for controlling the position of products on a conveyor, wherein each guide wheel system comprises:
• a fixed base of the guide wheel system for mounting the guide wheel system within a larger assembly;
• a moveable base of the guide wheel system, attached to an actuator of the guide wheel system and configured so that it can be displaced within the fixed base, comprising at least one guide wheel;
• an actuator, attached the moveable base of the guide wheel system and to the fixed base of the guide wheel system, configured to displace the moveable base of the guide wheel system relative to the fixed base;
• a controller, configured to selectively activate the actuator, controlling the engagement and disengagement of the guide wheels,
**characterized in, that** the controller can independently engage or disengage each of the plurality of guide wheel systems.

15. A drivebelt assembly for discharging metal product at high speeds, comprising:
• a drivebelt configured to accelerate a metal product for discharge;
• a frame, comprising a plurality of magnets to generate a magnetic field, configured to support the drivebelt
**Characterized in that** the assembly comprises a servomotor, configured to control the velocity and acceleration of the drivebelt.
